# DEMANDE DE BREVET EUROPEEN

(11) **EP 1 070 953 A1**
(43) Date de publication de la demande: **24.01.2001**
(21) Numéro de dépôt: 99430014.3
(22) Date de dépôt: 21.07.1999
(51) Int. Cl.: G01N 21/15, G01N 21/85

(54) **Procédé et dispositif de mesure optique de la transparence d'un liquide**

(71) Demandeur: SOCIETE D'ETUDE ET DE REALISATION D'EQUIPEMENTS SPECIAUX - S.E.R.E.S., 13793 Aix en Provence Cedex (FR)
(72) Inventeur: Minard, Alain, 13390 Auriol (FR); Bruno, Georges, 13100 Aix en Provence (FR)
(74) Mandataire: Domange, Maxime

(57) **Abrégé**

Le secteur technique de l'invention est le domaine de la recherche ou de l'analyse des matériaux, en particulier pour les liquides, par moyen optique. Le procédé de mesure optique de la transparence d'un liquide (2) utilise un analyseur de turbidité, comprenant au moins un émetteur (7) de lumière (6₁) traversant une pièce optique (12₁) d'interface avec le liquide (2) ainsi éclairé, et au moins une cellule de mesure (9) recevant à travers une deuxième pièce optique (12₂) d'interface, une partie de ladite lumière (10) ayant parcouru une distance donnée dans ledit liquide (2). Selon le procédé de l'invention :
- on génère au voisinage des interfaces optique/liquide émettrices (19) et réceptrices (20) desdites pièces optiques (12) en contact avec ledit liquide (2), des ondes ultrasonores ;
- on crée ainsi des microcavités gazeuses dans le liquide (2) et on décape et nettoie lesdites surfaces (19, 20) d'interface quand ces microcavités implosent ;
- on arrête l'émission desdites ondes ultrasonores (21₁), et on relève la mesure de la lumière (10) reçue par la cellule (9).

## Description

La présente invention a pour objet un procédé et dispositif de mesure optique de la transparence d'un liquide.

Le secteur technique de l'invention est le domaine de la recherche ou de l'analyse des matériaux, en particulier pour les liquides, par moyen optique.

L'application principale de l'invention est de pouvoir déterminer la turbidité de l'eau, essentiellement pour contrôler sa qualité, en détectant en particulier les matières en suspension ou en émulsion, tels que des hydrocarbures, qui y seraient mélangés ; la détermination de cette turbidité est décrite dans la norme européenne et française NF, EN 2707 de 1994, qui reproduit intégralement la norme ISO 7027 de 1990 et auxquelles l'homme du métier pourra se reporter pour une meilleure compréhension éventuelle de la présente invention.

Il est rappelé en particulier que dans les liquides, la turbidité résulte de la présence de matières non dissoutes qui sont finement dispersées : elle peut être déterminée par la mesure de la diminution de l'intensité du flux lumineux lors de son passage à travers le liquide dans lequel la lumière est en partie absorbée, ou par la mesure de l'intensité de la lumière diffusée notamment à 90°; la diffusion de la lumière est en effet une propriété des liquides qui peut être utilisée pour mesurer cette turbidité ; la norme européenne référencée ci-dessus décrit quatre méthodes optiques de détermination de la turbidité de l'eau pour obtenir des informations de terrain sur les eaux superficielles, les eaux potables et les eaux résiduaires. La turbidité étant un paramètre global pour la détermination du niveau de pollution ou d'efficacité d'un procédé industriel, la présente invention peut avoir de nombreuses utilisations telles que :
- surveillance des rejets en sortie des stations d'épuration, eaux résiduaires chargées,
- contrôle de procédé d'épuration ou de procédé industriel,
- qualité de l'eau dans les bassins de décantation, les eaux de rivière et les lacs,
- détection d'anomalie du fonctionnement sur des filtres, séparateurs industriels,
- contrôle des effluents industriels, tels qu'en particulier pétroliers,
- contrôle du déballastage de navires pétroliers,
- contrôle des rejets en mer des eaux de cales des navires.

De nombreux équipements ont ainsi été développés pour permettre la mesure de la turbidité en milieu aqueux et plus récemment, pour satisfaire la norme ci-dessus ; certains de ces appareils ont pu faire l'objet de dépôts de demandes de brevet, tels que la demande EP 596231 publiée le 11 mai 1994, ou la demande internationale WO 9800701 publiée le 8 janvier 1998, qui décrit la combinaison d'un néphélométre et d'un turbidimètre on rappelle que la néphélométrie est la mesure de la concentration d'une émulsion d'après sa transparence.

Si ces appareils de mesure optique donnent entièrement satisfaction pour ce qui concerne la prise de mesure de l'intensité optique d'une lumière donnée après avoir traversé une distance déterminée dans le liquide à contrôler, la mesure proprement dite est souvent altérée par le fait que des salissures tels que des hydrocarbures, peuvent se déposer à la surface des interfaces optiques immergées dans le liquide ; ceux-ci permettant d'une part l'émission de la lumière dans ce liquide, et d'autre part la réception de celle-ci pour en faire la mesure : à ce jour, les procédés et dispositifs basés sur le principe de l'essuie-glace sont insuffisants et nécessitent une maintenance assidue.

Le problème posé est donc de pouvoir garantir une propreté desdites surfaces d'interface optiques avant chaque mesure pour que celles-ci soient fiables et sans dispositif mécanique nécessitant une maintenance lourde.

Une solution au problème posé est un procédé de mesure optique de la transparence d'un liquide à partir d'un analyseur de turbidité, comprenant au moins un émetteur de lumière traversant une pièce optique, telle qu'un barreau, une fibre optique ou autre, d'interface avec le liquide ainsi éclairé, et au moins une cellule de mesure recevant à travers une deuxième pièce optique d'interface, une partie de ladite lumière ayant parcouru une distance donnée dans ledit liquide . Suivant l'invention:
- on génère des ondes ultrasonores dans toutes les directions et autour des interfaces optique/liquide, émettrices et réceptrices desdites pièces optiques en contact avec ledit liquide, des ondes ultrasonores ; de manière à nettoyer ou empêcher la salissure desdites surfaces d'interface, en particulier quand des microcavités gazeuses ainsi créées dans le liquide implosent ;
- on arrête l'émission desdites ondes ultrasonores et on relève alors la mesure de la lumière reçue par la cellule.

Dans un mode préférentiel de réalisation, le dispositif suivant l'invention comporte une sonde immergeable dans le liquide, et dont le boîtier étanche comprend au moins l'émetteur de lumière, la cible de mesure, leurs pièces optiques associées d'interface et le générateur d'ultrasons dont le pavillon intègre les deux dites pièces optiques qui cent ainsi une surface commune d'émission avec celui-ci.

Le résultat est de nouveaux procédés et dispositifs de mesure de la transparence d'un liquide répondant au problème posé et permettant en particulier de mesurer la turbidité dudit liquide avec toute la fiabilité voulue. Un effet, contrairement aux turbidimètres actuels, le dispositif suivant l'invention permet, en particulier pour des mesures in situ, de bonnes qualités de mesures, quel que soit le degré de salissure du liquide analysé : en effet, les ultrasons émis empêchent d'une part, tout développement de micro-organismes et d'autre part, le dépôt de toute salissure au niveau des interfaces optiques.

De plus, la micro-cavitation provoquée par les ondes ultrasonores permet d'homogénéiser le milieu liquide en émulsionnant celui-ci quand il est en particulier confiné dans une cellule de mesure : ce phénomène permet de fiahiliser et de simplifier la détection tels que des hydrocarbures résiduels dans les rejets pétroliers ; car sinon ceux-ci s'amalgament en certaines parties du liquide, ce qui peut fausser la mesure puisque si cet amalgame passe dans le faisceau optique, la mesure relevée donnera une mesure bien plus élevée que la turbidité moyenne du milieu, et inversement, si cet amalgame est hors du faisceau, la mesure sera beaucoup trop faible et donc, dans tous les cas, non représentative de la turbidité moyenne du liquide.

De plus, les conditions d'installation sont assez simples et adaptables à beaucoup de sites, soit par simple immersion d'une sonde dans le liquide, soit par l'insertion des interfaces optiques et ultrasonores dans la paroi d'une tuyauterie ou dans une mini cuve à émulsion, etc...

On pourrait citer d'autres avantages de la présente invention mais ceux cités ci-dessus en montrent déjà suffisamment pour en prouver la nouveauté et l'intérêt.

La description et les figures ci-après représentent un exemple de réalisation de l'invention mais n'ont aucun caractère limitatif. D'autres réalisations sont possibles dans le cadre de la portée et de l'étendue de cette invention, en particulier :
- en changeant la disposition des éléments constitutifs de la sonde immergeable telle que représentée,
- en disposant les éléments nécessaires au procédé suivant l'invention, non pas dans une sonde, mais derrière une paroi d'un récipient ou d'une coque ou d'une tuyauterie, etc...,
- en utilisant le dispositif ou le procédé pour des mesures de transparence qui ne soient pas uniquement celles de turbidité,
- en mesurant non pas la lumière diffusée par un faisceau incident, mais la lumière directement émise par celui-ci après qu'elle ait traversé une distance donnée dans le liquide, soit ainsi après diffusion et absorption partielle dans celui-ci, et en disposant alors la cellule réceptrice et sa pièce optique d'interface en face du faisceau émetteur.

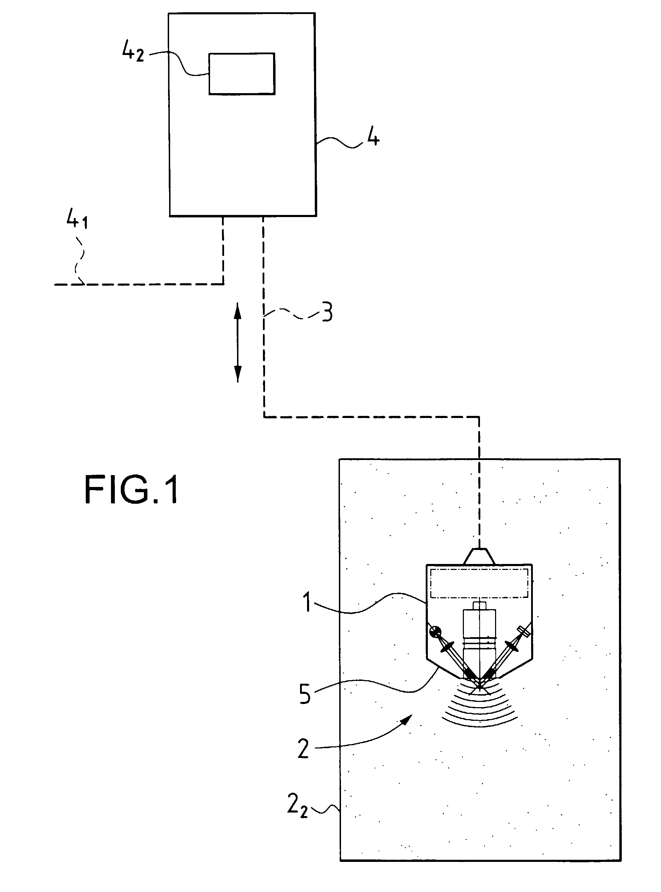

La figure 1 est une vue d'ensemble d'un dispositif suivant l'invention, comprenant une sonde immergeable dans une cuve.

La figure 2 est une vue en coupe simplifiée et agrandie de la sonde immergeable représentée sur la figure 1.

Les figures 3 et 4 représentent un dispositif d'encombrement réduit dans lequel les pièces optiques 12₁ et 12₂ sont des fibres optiques

Le dispositif de mesure optique de la transparence d'un liquide 2 suivant l'invention comprend un analyseur de turbidité de type connu, comprenant au moins un émetteur 7 de lumière 6₁ traversant une pièce optique 12₁ d'interface avec le liquide 2 ainsi éclairé, et au moins une cellule de mesure 9 recevant à travers une deuxième pièce optique 12₂ d'interface, une partie de ladite lumière 10 ayant parcouru une distance donnée dans ledit liquide 2.

Suivant l'invention, au moins un générateur d'ultrasons 15 dont le pavillon 13 est disposé à proximité d'au moins une pièce optique d'interface 12 défini ci-dessus, émet des ondes ultrasonores 21₁ balayant au moins la surface de l'interface 19, 20 de cette pièce, en contact avec ledit liquide 2, et se propageant dans ledit liquide 2, au voisinage de cette surface 19, 20 et dans toutes les directions autour de celle-ci en couvrant au moins lesdites surfaces 19, 20.

De préférence, la ou les pièce(s) optique(s) d'interface 12₁, 12₂ est, (ou sont) solidaire(s) et même intégrée(s) dans le pavillon 13, et la surface émettrice 19 et/ou la surface réceptrice 20 est, ou sont situées dans le plan de celle 21 dudit pavillon 13.

Suivant l'invention les pièces optiques d'interface 12 sont solidaires du pavillon 13 du générateur d'ultrasons de sorte que des ultrasons sont générés aussi à partir desdites surfaces 19, 20.

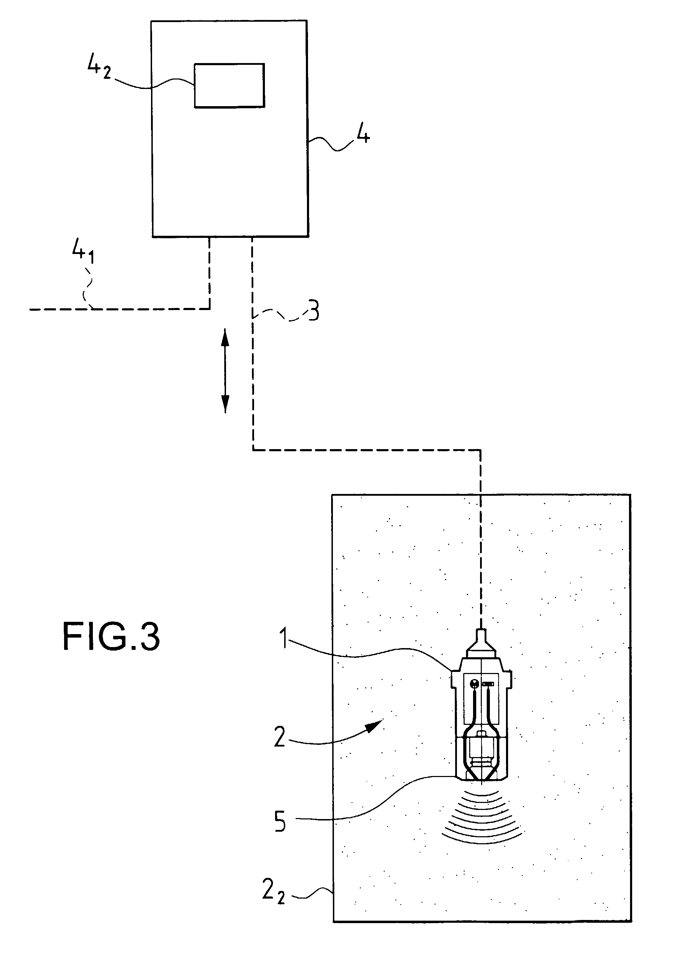

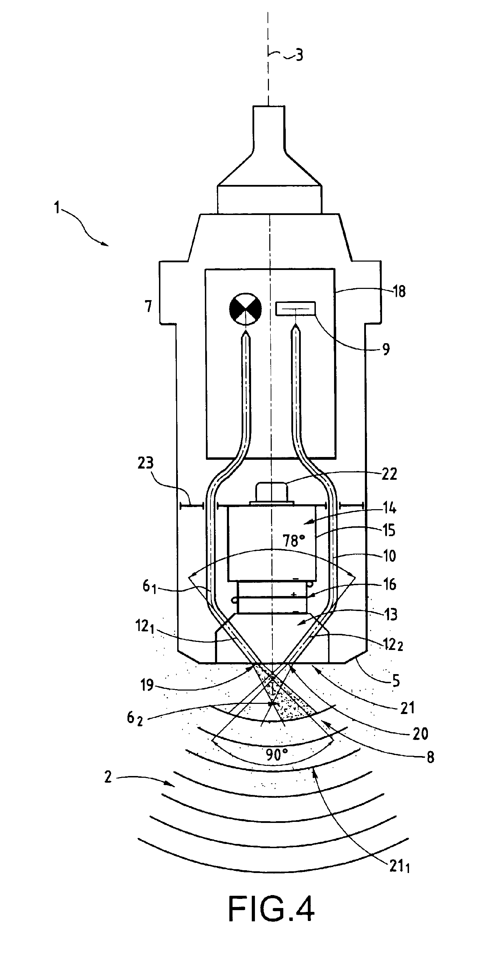

Dans un mode de réalisation représenté aux figures 3 et 4, les pièces optiques sont intégrées dans le pavillon 13 grâce à des perçages notamment cylindriques, réalisés dans ledit pavillon.

Dans le cas où l'on veut mesurer la lumière diffusée 8 latéralement notamment à 90° par le cône de lumière 6₂ émis par l'émetteur 7 dans le milieu liquide 2, lesdites pièces optiques 12₁ et 12₂ sont écartées l'une de l'autre et disposées suivant un même angle donné avec leur surface d'interface optique d'émission 19 et de réception 20 de la lumière dans le même plan : l'angle est déterminé tel qu'on capte par la pièce optique 12₂ d'interface de la cellule de mesure 9, la lumière 8 diffusée à au moins 90° de celle 6₂ émise dans le liquide 2 à travers la pièce optique 12₁ d'interface. De préférence, lesdites pièces optiques 12 sont disposées suivant un angle α formé par leurs axes, tel que les faisceaux lumineux 6₁ et 10 qui les traversent, fassent un angle d'au moins 30°, soit en fait de préférence 30, 90 ou 180°, dans le liquide 2 en tenant compte des indices et des coefficients de réfraction entre la matière desdites pièces optiques et le liquide 2.

Pour une mesure dans de l'eau à partir de pièces optiques 12₁ et 12₂ en verre ou fibre de verre, l'angle α est de 78° pour une mesure à 90° selon la norme ISO2707

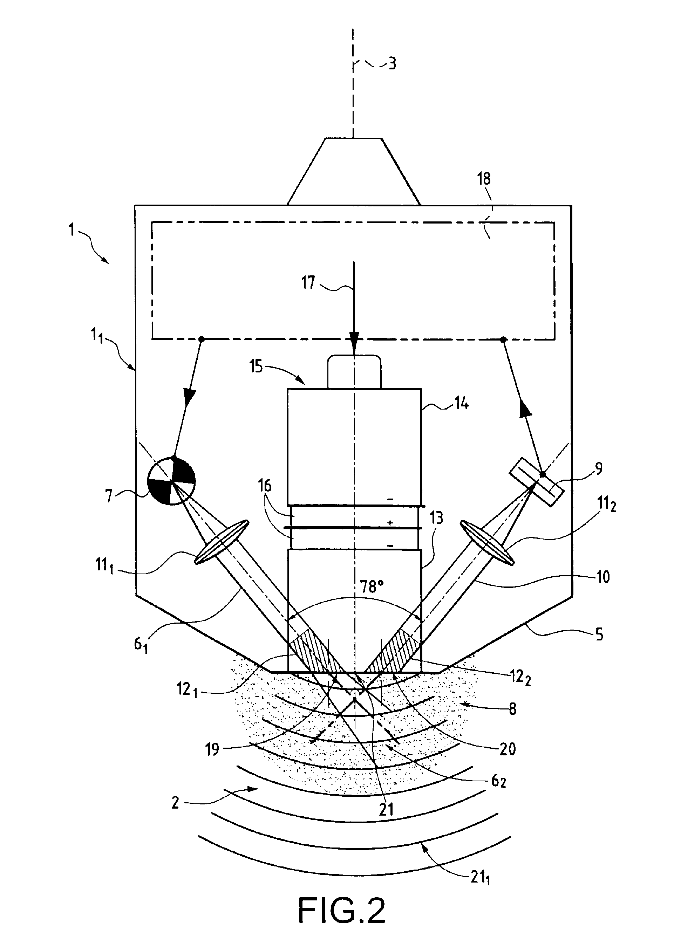

Lorsque les pièces optiques d'interface sont des barreaux de verre cylindriques comme sur la figure 2, le faisceau de lumière 6₁ est concentré vers ladite pièce optique 12₁ par une lentille 11₁ collimatant la lumière émise par l'émetteur 7. De même, le faisceau de lumière 10 capté à travers la pièce optique d'interface 12₂ traverse une lentille 11₂ de convergence pour le concentrer sur la cellule de mesure 9.

Sur la figure 3 on a représenté un mode de réalisation avantageux dans lequel les pièces optiques d'interface 12₁ et 12₂ avec 1 liquide 2 sont réalisées avec des fibres optiques. L'utilisation des fibres optiques souples permet que celles-ci s'étendent de manière courbe à l'extérieur du pavillon 13 dans lequel leur extrémité est intégrée de façon à servir de guide à la lumière entre l'émetteur 7 et la cellule de mesure 9 selon un encombrement réduit. En effet, du fait qu'il n'est plus nécessaire que la lumière suive un trajet rectiligne l'émetteur 7 et de la cellule de mesure 9 peuvent être rapprochées l'une de l'autre. En outre l'utilisation des lentilles 11₁ et 11₂ n'est plus nécessaire.

De préférence le diamètre des fibres optiques est compris entre 1 et 4 mm. En effet, si les fibres optiques ont un diamètre inférieur, la mesure est instable et, si le diamètre est supérieur elles ne sont pas assez souples pour supporter d'être courbées.

A titre illustratif avec des barreaux de verre de 8mm de diamètre, le dispositif de la figure a un diamètre de 130 mm à l'extrémité supérieure du cône 5 entourant la surface inférieure 21 du pavillon 13, alors que des fibres optiques de diamètre de 2,5mm permettent de réduire ce diamètre à 60 mm.

Le dispositif de la figure 4 de par son encombrement réduit rend plus aisé les mesures dans une canalisation de faible diamètre. En outre, grâce au diamètre réduit des surfaces d'interface des fibres optiques avec le liquide, le transducteur peut fonctionner à énergie réduite, notamment à 30w pour des fibres de 3.5 mm au lieu de 60w avec les barreaux de verre de la figure 2 de sorte que la sonde vibre moins et résiste mieux à l'usure.

Le faisceau de lumière 6₁ émettrice, est de préférence de la lumière infrarouge à une longueur d'onde comprise entre 700 et 1200 manomètres, tel que par exemple de l'ordre de 850 nanomètres, mais pourrait être également de la lumière ultraviolette de longueur d'onde comprise entre 150 et 400 nanomètres, ou même visible de longueur d'onde comprise entre 400 à 700 nanomètres,

Le générateur d'ultrasons 15 comprend d'une manière connue, outre le pavillon 13 d'émission des ondes ultrasonores 21₁, qui peut être réalisé en titane pour être le plus léger possible, une contre masse arrière 14, de préférence en laiton pour être lourde, et des céramiques piézo-électriques 16 alimentées, par contact avec les électrodes, en courant haute tension 17, générant des vibrations à la fréquence voulue à l'ensemble du générateur 15 : celui-ci est fixé, d'une part par une vis de précontrainte 22 maintenant l'ensemble solidaire et, d'autre part par tout dispositif de suspension 23, tels que des plots élastiques l'isolant des autres éléments constituant le dispositif, tel qu'en particulier, du boîtier 1₁ étanche de la sonde 1 immergeable dans le liquide 2 et représentée sur les figures jointes à titre d'exemple de réalisation.

Ledit boîtier 1₁ comprend en effet au moins l'émetteur de lumière 6₁, la cellule de mesure 9, leurs pièces optiques 12 d'interface et le générateur d'ultrasons 15 : ladite sonde 1 est reliée à tout câble de liaison 3 à un coffret de commande 4 situé en surface, au-dessus de la cuve 22 par exemple, de mesure ; ledit boîtier 1₁ comporte également au moins un boîtier 18 assurant l'interface électrique entre ledit câble de liaison 3 et les trois éléments de base composant ladite sonde, et qui sont l'émetteur de lumière 7, la cellule de mesure 9 et le générateur d'ultrasons 15 intégrant les deux pièces optiques d'interface associées à l'émetteur de lumière et à la cellule de mesure.

Le générateur d'ultrasons étant suspendu à l'intérieur du boîtier 1₁ de la sonde 1, est indépendant des autres éléments électriques, puisque seuls les faisceaux de lumière 6₁ et 10 traversent son pavillon 13, et le boîtier 1₁ assure l'étanchéité autour de sa surface émettrice 21 d'ultrasons 21₁. Dans le cas où le dispositif suivant l'invention ne serait pas installé dans une sonde comportant un boîtier fermé, les éléments de base décrits ci-dessus et composant celle-ci, peuvent être installés simplement dans un boîtier ou derrière une paroi intégrée dans celle isolant le liquide à contrôler, du reste d'une installation par exemple, tel que pour une coque de navire, une paroi d'une tuyauterie ou d'une cuve...

De préférence, pour diminuer la surface active pouvant piéger l'air issu des micro cavitations créées et qui implosent ensuite, assurant le nettoyage de la surface 21 et donc de celle des pièces d'interface, le boîtier 1₁ de la sonde comporte une partie conique 5 convexe entourant la surface 21 du pavillon 13 d'émission d'ultrasons : lesdites ondes ultrasonores sont de préférence de fréquence de 20 à 50 kHz.

Ledit coffret de commande 4 en surface assure, d'une part, le pilotage et l'alimentation du générateur d'ultrasons 15 avant toute mesure optique, l'alimentation de l'émetteur de lumière 7, et le traitement de la mesure optique relevée par le récepteur 9 ayant capté la lumière diffusée latéralement et/ou émise directement dans l'axe du faisceau émetteur, après transmission dans le liquide 2, lequel signal issu du capteur étant de préférence pré-amplifié dans le boîtier d'interface 18 situé dans la sonde 1 ; le coffret de commande 4 étant alimenté par toute source de courant disponible 4₁ et comprenant tout dispositif d'affichage du résultat de la mesure 4₂ ; il est possible de traiter les mesures et l'émission d'ultrasons pour deux, quatre ou six sondes grâce à des dispositifs à multivoies par multiplexage.

De façon avantageuse, lorsque le dispositif suivant l'invention est de masse réduite comme sur la figure 3, le dispositif de suspension 22 est constitué par une membrane élastique ou « flector » réalisée notamment en PVDF sous forme d'un disque de 1,5mm d'épaisseur. Cette membrane élastique permet de réduire davantage que des plots élastiques la transmission des vibrations du générateur d'ultrasons 15 au boîtier. Et, par conséquent, le maximum de vibration se produit au niveau du pavillon 13.

Le procédé et dispositif de mesure optique de la transparence d'un liquide suivant l'invention, outre son intérêt technique permettant par exemple dans le cadre d'une station d'épuration, d'une part des mesures amont où les eaux sont très chargées et, d'autre part des mesures aval où les eaux sont faiblement chargées, offre un intérêt économique certain.

Les plages de mesure de la transparence de la turbidité du liquide 2 sont fonction du milieu, soit par exemple de 0 à 100 NTU ou 0 à 5000 NTU pour les eaux très chargées (NTU étant l'abréviation de "Nephelometry Turbidimetry Unit" défini par les normes dans ce domaine correspondant à une mesure de la lumière diffusée à 90° du rayon ou incident dans le liquide), ou de 0 à 20 grammes par litre pour des boues pour les mesures à 180° après absorption dans le liquide.

## Revendications

1. Procédé de mesure optique de la transparence d'un liquide (2) à partir d'un analyseur de turbidité, comprenant au moins un émetteur (7) de lumière (6₁) traversant une pièce optique (12₁) d'interface avec le liquide (2) ainsi éclairé, et au moins une cellule de mesure (9) recevant à travers une deuxième pièce optique (12₂) d'interface, une partie de ladite lumière (10) ayant parcouru une distance donnée dans ledit liquide (2), caractérisé en ce que :
- on génère dans toutes les directions et autour des interfaces optique/liquide émettrices (19) et réceptrices (20), des ondes ultrasonores en couvrant au moins les surfaces (19, 20) de ces interfaces en contact avec le liquide ; de manière à décaper et nettoyer ou empêcher la salissure desdites surfaces (19, 20) d'interface;
- on arrête l'émission desdites ondes ultrasonores (21₁), et on relève la mesure de la lumière (10) reçue par la cellule (9).

2. Procédé suivant la revendication 1, caractérisé en ce qu'on capte par la pièce optique (12₂) d'interface de la cellule de mesure (9), la lumière (8) diffusée à au moins 30° de celle (6₂) émise dans le liquide (2) à travers la pièce optique (12₁) d'interface d'émission.

3. Procédé selon l'une quelconque des revendications 1 ou 2 caractérisé en ce qu'on mesure la lumière diffusée (8) latéralement, de préférence à 90°, par un cône de lumière(6₂) émis par l'émetteur (7) dans le milieu liquide (2), à travers ladite pièce optique (12₁) et on capte par l'autre pièce optique (12₂) d'interface de la cellule de mesure (9) la lumière diffusée (8), de préférence à 90°, de celle (6₂) émise dans le liquide (2) à travers la pièce optique 12 d'interface.

4. Procédé suivant l'une quelconque des revendications 1 à 3, caractérisé en ce qu'on génère des ondes ultrasonores à des fréquences de 20 à 50 kHz.

5. Procédé suivant l'une quelconque des revendications 1 à 4, caractérisé en ce qu'on émet de la lumière (6₁) infrarouge à une longueur d'onde comprise entre 700 et 1200 nanomètres.

6. Dispositif de mesure optique de la transparence d'un liquide (2) comprenant un analyseur de turbidité, comportant au moins un émetteur (7) de lumière (6₁) traversant une pièce optique (12₁) d'interface avec le liquide (2) ainsi éclairé, et au moins une cellule de mesure (9) recevant à travers une deuxième pièce optique (12₂) d'interface, une partie de ladite lumière (10) ayant parcouru une distance donnée dans ledit liquide (2), caractérisé en ce qu'au moins une pièce optique d'interface 12 est solidaire du pavillon 13 d'un générateur d'ultrason qui émet des ondes ultrasonores balayant au moins la surface (19, 20) de l'interface optique (12) qui est en contact avec ledit liquide (2).

7. Dispositif suivant la revendication 6, caractérisé en ce que lesdites pièces optiques d'interface (12) sont solidaires du pavillon (13), intégrées dans celui-ci (13) et les surface émettrices (19) et réceptrices sont situées dans le plan de celle (21) dudit pavillon (13) et génèrent des ultrasons.

8. Dispositif suivant l'une quelconque des revendications 6 ou 7, caractérisé en ce qu'il comporte une sonde (1) immergeable dans le liquide (2), et dont le boîtier (1₁) étanche comprend au moins l'émetteur de lumière (6₁), la cellule de mesure (9), leur pièce optique associée (12) d'interface et le générateur d'ultrasons (15).

9. Dispositif suivant l'une quelconque des revendications 6 à 8, caractérisé en ce que le générateur d'ultrasons (15) est suspendu à l'intérieur d'un boîtier (1₁) qui assure l'étanchéité autour de la surface émettrice (21) du pavillon (13) d'émission d'ultrasons.

10. Dispositif suivant l'une quelconque des revendications 8 ou 9, caractérisé en ce que ledit boîtier (1₁) comporte une partie conique (5) convexe, entourant la surface (21) du pavillon (13) d'émission d'ultrasons.

11. Dispositif suivant l'une quelconque des revendications 6 à 10, caractérisé en ce que les pièces optiques (12) sont disposées pour que les faisceaux lumineux qui les traversent fassent un angle d'au moins 30° dans le liquide (2).

12. Dispositif selon l'une quelconque des revendications 6 à 11 caractérisé en ce que lesdites pièces optiques (12) sont intégrées dans des perçages effectués dans ledit pavillon (13).

13. Dispositif selon l'une quelconque des revendications 6 à 12 caractérisé en ce que lesdites pièces optiques (12₁, 12₂) sont écartées l'une de l'autre et disposées dans ledit pavillon suivant un même angle donné avec leur surface d'interface optique d'émission (19) et de réception (20) de la lumière dans le même plan, ledit angle étant déterminé de façon à ce que les faisceaux lumineux qui les traversent (6₁, 10) forment un angle d'au moins 30°, de préférence 90° ou 180° dans le liquide (2).

14. Dispositif selon l'une quelconque des revendications 6 à 13 caractérisé en ce que lesdites pièces optiques (12₁, 12₂) sont des fibres optiques.

15. Dispositif suivant la revendication 14 caractérisé en ce que lesdites fibres optiques sont souples et s'étendent de manière non rectiligne à l'extérieur du pavillon (13) de façon à servir de guide à la lumière entre l'émetteur (7) et la cellule de mesure (9) selon un encombrement réduit.

16. Dispositif selon l'une quelconque des revendications 14 ou 15 caractérisé en ce que le diamètre des fibres optiques est compris entre 1 et 4 mm.

17. Dispositif selon l'une quelconque des revendications 6 à 16 caractérisé en ce que le générateur d'ultrasons (15) comprend une vis de précontrainte (22) maintenant solidaire une contre-masse arrière (14) et le pavillon (13).

18. Dispositif selon l'une quelconque des revendications 14 à 17 caractérisé en ce que le générateur d'ultrasons (15) est fixé dans sa partie supérieur dans le boîtier (11) par un dispositif de suspension (23) constitué par une membrane élastique.
